Europäisches Patentamt

European Patent Office

Office européen des brevets

(11) Numéro de publication: **0 266 507**
**A1**

(12) ## DEMANDE DE BREVET EUROPEEN

(21) Numéro de dépôt: **87112778.3**

(22) Date de dépôt: **02.09.87**

(51) Int. Cl.⁴: **G08B 15/00**

(30) Priorité: **08.09.86 FR 8612729**

(43) Date de publication de la demande:
**11.05.88 Bulletin 88/19**

(84) Etats contractants désignés:
**CH DE ES FR GB IT LI**

(71) Demandeur: **COMPAGNIE GENERALE D'AUTOMATISME CGA-HBS Société Anonyme dite**
**12, rue de la Baume**
**F-75008 PARIS(FR)**

(72) Inventeur: **Camps, Robert**
**19, quai Louis Blériot**
**F-75016 Paris(FR)**
Inventeur: **Moudir, Said**
**9B, Plateau Frontenex**
**CH-1208 Geneve(CH)**

(74) Mandataire: **Weinmiller, Jürgen et al**
**Lennéstrasse 9 Postfach 24**
**D-8133 Feldafing(DE)**

(54) **Dispositif de surveillance en particulier par camera vidéo.**

(57) Le dispositif de surveillance utilise un organe de surveillance tel une caméra vidéo (7) dont les signaux sont captés par une centrale de détection (25), organe porté par un châssis mobile (2) sous l'effet de moyens propulseurs à l'intérieur d'un tube (1) pourvu d'une fenêtre longitudinale (9) traversée par l'axe de visée transversal de l'organe de surveillance.

Il se caractérise en ce que la fenêtre (9) est couverte par un volet longitudinal élastique (10) dont un bord est solidaire du tube et l'autre libre, des doigts profilés (15-16) solidaires du châssis (2), dont l'écartement est réglable, soulevant le volet longitudinal (10) de part et d'autre de l'axe de visée et au-delà de cet axe.

Ce dispositif permet d'exercer une surveillance sur de grandes distances.

FIG. 2

## Dispositif de surveillance en particulier par caméra vidéo

L'invention porte sur un dispositif de surveillance utilisant un organe de surveillance tel une caméra vidéo dont les signaux sont captés par une centrale de détection organe porté par un châssis mobile sous l'effet de moyens propulseurs à l'intérieur d'un tube pourvu d'une fenêtre longitudinale traversée par l'axe de visée transversal de l'organe de surveillance.

De tels dispositif se sont révélés particulièrement efficaces pour la surveillance d'espaces de grandes dimensions qu'il s'agisse de lieux publics magasins, salles de réunion ou autres et même de portions importantes de circuits par exemple de circuits auto-routiers.

En effet la longueur du tube dans lequel se déplace l'organe de surveillance peut être extrêmement importante jusqu'à atteindre plusieurs kilomètres si les moyens propulseurs sont conçus en conséquence.

Il s'est cependant révélé à l'usage que la fenêtre longitudinale nécessaire pour la traversée de l'axe de visée peut comorter certains inconvénients. Elle laisse pénétrer les salissures et les corps étrangers ce qui exige un entretien coûteux et même risque de provoquer des interruptions de fonctionnement et des pannes. De toutes façons elle doit être fermée si le moyen propulseur est un gaz sous pression ou en dépression.

La solution consistant à pourvoir la fenêtre d'une surface vitrée transparente a été envisagée et essayée avec succès mais elle est relativement onéreuse à la fabrication et nécessite des moyens automatiques de nettoyages de la vitre.

L'invention a pour objet de remédier à ces inconvénients et pour ce faire le dispositif de surveillance conforme à l'invention se caractérise en ce que la fenêtre est couverte par un volet longitudinal élastique dont un bord est solidaire du tube et l'autre libre, des doigts profilés solidaires du châssis soulevant le volet longitudinal de part et d'autre de l'axe de visée et au-delà de cet axe.

On conçoit qu'un tel volet protège l'intérieur du tube de la pénétration de tous corps étrangers sans nécessiter le moindre entretien. Il permet en outre grâce à son soulèvement de part et d'autre de l'axe de visée un passage direct qui améliore la netteté des signaux reçus et par exemple une vision directe si l'organe de surveillance est une caméra.

Enfin il autorise l'utilisation de tous moyens propulseurs y compris un fluide et en particulier de l'air en dépression.

De préférence, les doigts profilés, dont l'écartement est réglable comportent une arête extérieure et au moins un plan incliné s'étendant au-delà de l'axe de visée du côté du bord du volet solidaire du tube.

Cette disposition assure un soulèvement progressif du volet quelque soit le sens dans lequel se déplace le châssis mobile et évite toute détérioration du volet même à grande vitesse.

Selon un perfectionnement entrant dans le cadre de l'invention, les doigts profilés portent des organes annexes de communication avec la centrale tels un émetteur et un récepteur de son.

Ces doigts peuvent effectivement être utilisés comme support pour tous objets utiles soit à la surveillance soit à la communication entre la centrale de détection et l'espace sous surveillance puisqu'ils sont en permanence à l'extérieur du tube.

Un mode de réalisation de l'invention est maintenant décrit à titre d'exemple non limitatif en référence au dessin annexé dans lequel :

-la figure 1 est une vue en coupe longitudinale partielle montrant un secteur d'un dispositif de surveillance conforme à l'invention.

-la figure 2 est une vue de côté du même secteur ; et

-la figure 3 est une vue en perspective toujours du même secteur mais à échelle réduite.

Le dispositif de surveillance représenté comprend un tube cylindrique 1 dont la longueur correspond à l'expace à surveiller et peut aller de quelques mètres à plusieurs centaines de mètres ou même plusieurs kilomètres.

Dans ce tuve est placé un châssis 2 constitué ici d'une simple plaque horizontale supportée par deux disques d'extrémité 3 et 4 dont le diamètre correspond au diamètre intérieur du cylindre 1.

Deux guides de section trapézoïdale 5 et 6 sont disposés le long de deux génératrices opposées à l'intérieur du cylindre 1. Il collaborent avec deux découpes de section correspondante prévues dans chaque disque pour assurer une translation du châssis sans rotation. Ils peuvent également servir de façon classique à l'alimentation électrique des appareils portés par le châssis grâce à des plots et à des rails convenablement disposés dans les disques et sur les guides.

Sur le châssis 2 est montée une caméra vidéo 7 à viseur 8 transversal dont l'axe optique est approximativement dans le plan horizontal de symétrie de l'ensemble.

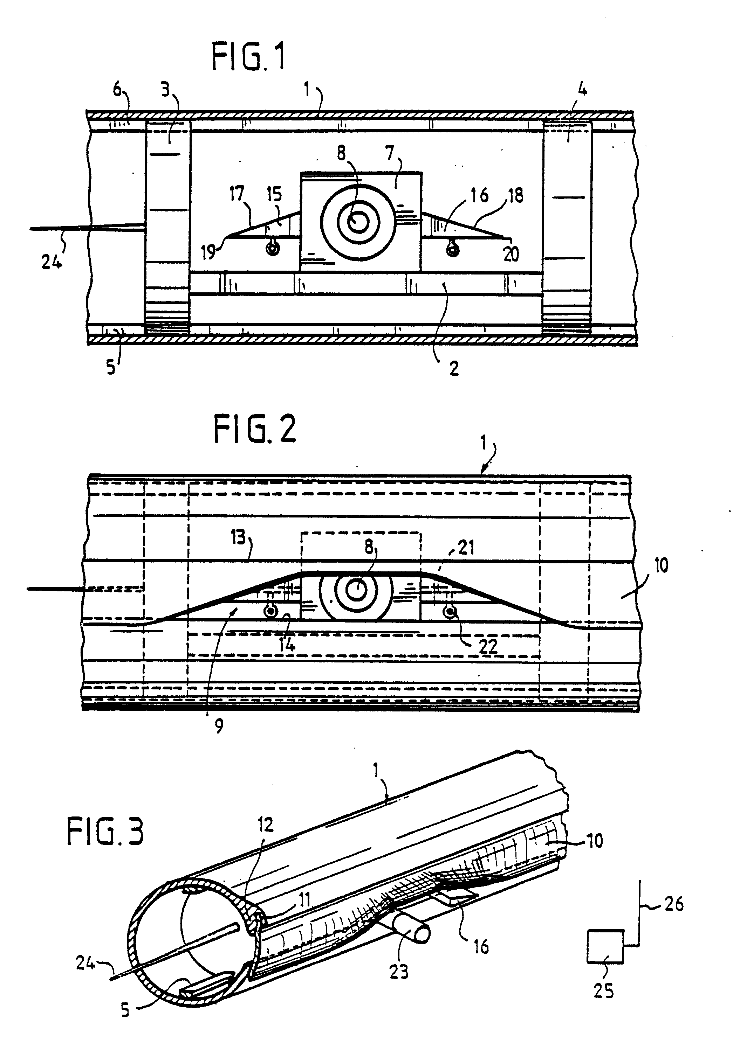

Comme on le voit mieux aux figures 2 et 3 le cylindre 1 est pourvu d'une lumière longitudinale 9 formant une fenêtre continue pour assurer le passage des rayons lumineux qui doivent atteindre le viseur 8 de la caméra 7.

Devant cette fenêtre 9 est monté un volet 10 en un matériau souple et élastique tel du caoutchouc naturel ou synthétique ou encore une matériel plastique convenable. Le montage du volet 10 se fait grâce à une lèvre 11 qu'il porte à sa partie haute, lèvre qui est pincée par un bac 12 prévu le long de l'arête supérieure 13 de la fenêtre 9. Comme on le voit clairement à l'examen des figures 2 et 3 du dessin, le volet 1 en position de repos recouvre légèrement l'arête inférieure 14 de cette fenêtre.

De part et d'autre de la caméra 7 sont montés deux doigts 15 et 16 de section essentiellement triangulaire comportant chacun un plan incliné 17, 18 qui s'étend de la caméra à une arête terminale 19, 20. Ces deux doigts se prolongent vers l'extérieur du tube 1 à travers de la fenêtre 9 de façon à soulever le volet élastique 10 pour que sa partie comprise entre les deux plans inclinés 17 et 18 dégage optique du viseur 8 de la caméra 7.

Il est à noter que le montage des doigts 15 et 16 sur la caméra 7 peut être prévu rélable en les enfilant par exemple sur les tiges telles que 21 avec interposition d'un moyen de blocage 22.

On a représenté à la figure 3 un micor 23 monté à l'extérieur du tube 1 à l'extrémité du doigt 15. On a également représenté sur cette figure de façon schématique une antenne émettrice récceptrice 24 apte à recevoir et à transmettre les signaux pour la caméra vidéo 7 et le micro 23 en coopération avec une centrale de détection 25 elle aussi équipée d'une antenne émettrice réceptrice 26.

Le dispositif décrit fonctionne de la façon suivante :

L'ensemble mobile constitué par les disques 3 et 4, le châssis 2 et les instruments qu'il porte est mis en mouvement dans l'exemple représenté par une dépression créée soit à gauche soit à droite, dépression qu'il est possible d'obtenir malgrès la fenêtre 9 puisque le volet 10 se plaque sur cette fenêtre 9 jusqu'au niveau des disques 3 et 4 et ne s'en détache qu'entre ces disques dans la zone comprise entre les arêtes 19 et 20 des doigts 15 et 16.

On notera d'ailleurs que le déplacement de l'ensemble mobile pourrait être obtenu par tous autres moyens y compris par un moteur pas à pas monté sur l'ensemble même et en prise avec une ou plusieurs roues motrices.

Au cours des déplacements du châssis les doigts 15 ou 16 assurent le soulèvement du .volet 10 permettant le fonctionnement de la caméra vidéo sans aucun obstacle plus ou moins transparent. La forme profilée des doigts évite toute usure du volet.

Si le châssis s'arrête, soit automatiquement soit naturellement, en un lieu déterminé ou un incident à été signalé par la caméra vidéo, le micro 23 permet une conversation entre les personnes présentes sur le lieu de l'incident et le personnel de la centrale de détection 25.

On notera enfin que le volet 10 évite tout entretien et toute détérioration accidentelle ou volontaire puisqu'il assure exepté dans la zone de la caméra vidéo 7 l'iolement de tout l'intérieure du tube 1 sur toute sa longeur.

**Revendications**

1/ Dispositif de surveillance utilisant un organe de surveillance tel une caméra vidéo (7) dont les signaux sont captés par une centrale de détection (25, organe par une châssis mobile (2) sous l'effet de moyens propulseurs à l'intérieur d'un uve (1) pourvu d'une fenêtre longitudinale (9) traversée par l'axe de visée transversal de l'organe de surveillance, caractérisé en ce que la fenêtre (9) est couverte par un volet longitudinal élastique (10) dont un bord est solidaire du tube et l'autre libre, des doigts profilés (15-16) solidaires du châssis (2) soulevant le volet longitudinal (10) de part et d'autre de l'axe de visée et au-delà de cet axe.

2/ Dispositif de surveillance selon la revendication 1, caractérisé en ce que l'écartement des doigts profilés (15-16) est réglable.

3/ Dispositif de surveillance selon la revendication 1 ou la revendication 2, caractérisé en ce que les doigts profilés (15-16) comportent une arête extérieure (19-20) et au moins un plan incliné (17-18) s'étendant au-delà de l'axe de visée du côté du bord du volet (10) solidaire du tube (1).

4/ Dispositif de surveillance selon l'une des revendications 1 à 3, caractérisé en ce que les doigts profilés (15-16) portent des organes annexes (23) de communication avec la centre (25) tels un émetteur et un récepteur de son.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 589 991 (G.J. BEHLES) <br> * En entier * <br> --- | 1 | G 08 B 15/00 |
| A | CH-A- 651 984 (A. DUCROT et al.) <br> * En entier * <br> --- | 1,4 | |
| A | FR-A-2 126 200 (LUCKS & CO.) <br> * Page 5, ligne 1 - page 6, ligne 6; figure 4 * <br> ----- | 1-3 | |

**DOMAINES TECHNIQUES RECHERCHES (Int. Cl.4)**

G 08 B
H 04 N

Le présent rapport a été établi pour toutes les revendications

| Lieu de la recherche | Date d'achèvement de la recherche | Examinateur |
|---|---|---|
| LA HAYE | 28-12-1987 | REEKMANS M.V. |